# EUROPEAN PATENT SPECIFICATION

(11) **EP 4 367 291 B1**
(45) Date of publication and mention of the grant of the patent: **16.04.2025**
(21) Application number: 22741237.6
(22) Date of filing: 30.06.2022
(51) Int. Cl.: C25B 1/04, C25B 1/26, C25B 9/00, C25B 9/01, C25B 9/23, C25B 9/75, C25B 9/77

(54) **ELECTROLYZER WITH MULTI-CELL ELEMENTS**
ELEKTROLYSEUR MIT MEHRZELLIGEN ELEMENTEN
ÉLECTROLYSEUR AVEC ÉLÉMENTS MULTI-CELLULES

(30) Priority: 08.07.2021 EP 21184621
(43) Date of publication of application: 15.05.2024
(73) Proprietor: thyssenkrupp nucera AG & Co. KGaA, 44269 Dortmund (DE)
(72) Inventor: KLINK, Stefan, 44789 Bochum (DE); TOROS, Peter, 45326 Essen (DE); BRINKMANN, Jonas, 44803 Bochum (DE); AUSTENFELD, Sebastian, 59494 Soest (DE); SCANNELL, Robert, 64319 Pfungstadt (DE)
(74) Representative: thyssenkrupp Intellectual Property GmbH
(86) International application number: PCT/EP2022/068109
(87) International publication number: WO 2023/280678

(56) References cited:
- CN-A- 111 952 647
- CN-B- 106 702 421
- JP-A- 2021 070 849
- US-A1- 2009 308 738

## Description

### Background of the invention

The invention relates to an electrolyzer according to the preamble of claim 1.

In the technical field of large-scale production of hydrogen and/or chlorine, e.g. in the megawatt range, there are two main design categories of electrolyzers:
The first design category is the so-called filter press design in which the electrolyzer stack comprises two end parts connected to the poles of a power supply, and a multitude of bipolar plates. Adjacent end parts and bipolar plates are separated by a separator being a diaphragm or a membrane, thus forming a multitude of electrolysis cells in series. Each cell is enclosed on the anodic side by one bipolar plate and on the cathodic side by another adjacent bipolar plate and is divided into two half-cells by the separator. The bipolar plate can have any shape that serves to create electrolysis cells. The mechanical integrity and sealing of the cell volumes is provided by means of an external compression device, e.g. a set of tierods, compressing all bipolar plates and separators of the stack at once. Leak-tightness is only achieved in the compressed state. Typically, such electrolyzers for large-scale electrolysis have a cell area of 2 to 4 square meters and contain between 50 and 200 electrolysis cells in one electrolysis stack. The total weight of such an electrolyzer is typically several tens of tons, and the sealing force to be supplied by the compression device is about 1-10 MPa. Depending on the sealing area this results in a force of several tens of tons.

Examples of electrolyzers of the filter press design are known e.g. from US 2003/0155232 A1 and WO 2020/203319 A1. The filter press design has the disadvantage that replacing such an electrolyzer or exchanging elements thereof is de facto only feasible after opening the electrolyzer on site. Thus, assembly and maintenance of the electrolyzers has usually to be done on site resulting in long downtimes of the involved facilities.

One way to circumvent the above-mentioned problems would be to downsize the electrolyzers and use electrolyzers with a significantly smaller cell area as they are used in smaller scale electrolysis plants, for e.g. hydrogen production or in fuel cells, in the kilowatt range. Due to the reduced size, these electrolyzer stacks are easier to handle, so that they can delivered pre-assembled and replaced as a whole. However, for large-scale production in the megawatt range, in particular in the range of tens to hundreds of megawatt, the downsizing would require a huge number of individual electrolyzers resulting in larger space requirements and increased maintenance costs.

The second known design category is the single element design, as marketed in particular by thyssenkrupp Uhde Chlorine Engineers. In this design, each electrolysis cell comprises two half-shells, namely an anode and a cathode half-shell, that are separated by a membrane or diaphragm as a separator. The two half-shells are connected to each other via a sealing system that isolates the anode and cathode half-shell from each other and prevents leakage of electrolyte and/or gases to the outside. As such, each cell forms a single element that is individually leak-tight and can be safely assembled, handled, and replaced by itself without affecting the whole electrolyzer. The single element cells are suspended in a rack formed by a steel frame and are pressed together to ensure a good electrical conductivity between contacting adjacent single elements. As compared to the filter press design, in which the external compression device has to provide the sealing forces for all cells (and good conductivity), in the single element design the required compression forces to only ensure good conductivity are smaller by orders of magnitude.

An electrolyzer of this type is known e.g. from DE 196 41 125 A1. This design has the disadvantage that it requires a high number of individual components, i.e. two half-shells and a flange frame instead of one bipolar plate, more base materials and more manufacturing steps, resulting in higher manufacturing effort and assembly costs.

From US 2009/0308738 A1 an alkaline electrolyzer with a high operating pressure capability of up to 200 bar and an active area of the alkaline electrolyzer of 108 in² (= 0,07 m²) is known. Tie rod fasteners are used in conjunction with reinforcement bars in order to stiffen the outer half-cell portions against the internal pressures of up to 200 bar. Instead of individual tie rods for each cell, a group of six or more cells can be connected into a larger module by extended tie rods. Connectivity between the respective cells is achieved by the installation of spanner tubes connecting opposed sets of banana jack connectors.

In CN 106702421 A a sodium chlorate electrolysis system is described that has 4 rows of electrolytic cells, wherein in each row the cells are grouped in four groups of electrolytic cells with 15 single cells each. The number of sodium chlorate electrolyzer groups can be flexibly combined according to capacity demand and for maintenance, the electrolyzer groups can be replaced individually.

### Brief Summary of Invention

The object of the invention is to provide an electrolyzer for large-scale electrolytic production of hydrogen and/or chlorine that ensures safe operation and an ease of handling and maintainability, and has reduced requirements for base materials and manufacturing effort at the same time.

This object is achieved by an electrolyzer with the features of claim 1.

Hereby, an electrolyzer is provided, the electrolyzer comprising an electrolysis stack, which contains a plurality of panel-like electrolysis cells being electrically interconnected in series, and means for mechanically securing the electrical interconnection of the electrolysis stack. Each electrolysis cell comprises an anode chamber with an anode arranged therein and a cathode chamber with a cathode arranged therein, wherein the anode chamber and the cathode chamber are separated from one another by a sheet-like separator. According to the invention, the stack contains at least two multi-cell elements, each comprising a plurality of the electrolysis cells and mechanical compression means. The electrolysis cells of each multi-cell element are held together in a sealed manner by the mechanical compression means. The means for mechanically securing the electrical interconnection of the stack are configured to mechanically secure the electrical interconnection of the multi-cell elements.

Thus, according to the invention, the electrolysis stack of the electrolyzer is subdivided into multi-cell elements that are separately sealed by the mechanical compression means. By providing additional compression means for aggregating a plurality of electrolysis cells in a multi-cell element, different means are used to provide the sealing forces and the electrical contact forces, namely the mechanical compression means and the means for mechanically securing the electrical interconnection of the stack, respectively. Thereby the requirements for providing pressure by the means for securing the electrical interconnection are reduced, allowing for a less massive design of the electrolyzer compared to the conventional filter press design. Further, the multi-cell elements can be delivered in a pre-assembled state to the site of the electrolysis plant in which the electrolyzer is to be installed. Hence, it is also possible to make quality and functionality tests on the pre-assembled multi-cell elements before it is delivered.

As compared to a single element design, wherein every single cell has to be encased within two shell parts providing for sufficient mechanical stability to be handled as a single element, in the inventive stack of multi-cell elements only each multi-cell element as a whole needs to exhibit handling stability. Thus, the amount of electrically conductive material, as e.g. nickel or titanium, used to make at least parts of the anode and cathode chambers of the electrolysis cells is reduced. Moreover, since the cells of the multi-cell element do not need to be closed and sealed by individual bolt sets, but can be sealed altogether by the mechanical compression means, the manufacturing effort can be reduced, as well.

Preferably, the multi-cell elements are individually replaceable in a maintenance state of the electrolyzer, in which the means for mechanically securing the electrical interconnection of the stack are in a loosened state, while the mechanical compression means are in a fastened state. Then, it is possible to remove and insert single multi-cell elements without disassembling the electrolyzer completely. Hereby, downtimes of the electrolyzers for maintenance are reduced.

According to the invention, the means for mechanically securing the electrical interconnection of the electrolysis stack are arranged to interact with the outmost electrolysis cells of the stack in order to exert a defined compressive force on the stack. The external compressive force acting on the stack as a whole improves the cell-performance and is also beneficial for alignment of the multi-cell elements in the stack. Alternatively, the means for mechanically securing the electrical interconnection of the electrolysis stack can be attached to at least two, preferably to any two, neighboring multi-cell elements in order to provide a contact pressure for the neighboring multi-cell elements. For example, the contact pressure may be provided between adjacent backwalls and/or between contact tabs of the neighboring multi-cell elements.

In preferred embodiments, the multi-cell elements of the electrolyzer each contain 3 to 50, more preferably 5 to 15, electrolysis cells. In view of the material requirements, it is preferred to aggregate many electrolysis cells within each multi-cell element. However, for the ease of handling the number of electrolysis cells in each multi-cell element has to be limited. With a number of electrolysis cell in the above range it is ensured that there is a significant positive effect on material and assembly costs, while at the same time the multi-cell elements can still be handled and transported by standard lifting devices, such as gantries or overhead cranes and forklifts.

In principle, it is conceivable that the multi-cell elements end with an open anode or cathode half-cell and are installed in the electrolyzer with interposed additional separators. However, in preferred embodiments the multi-cell elements are equipped with exterior back walls providing, preferably planar, contact surfaces for the electrical connection with an adjacent multi-cell element. Thereby each multi-cell element forms an independent sub-unit of the electrolyzer that can be installed in a plug-and-play manner.

In preferred embodiments the multi-cell elements comprise two end parts, containing the anode chamber and the cathode chamber of the outmost electrolysis cells of the multi-cell element, respectively, a number of middle parts containing the cathode chamber and the anode chamber of adjacent inner electrolysis cells being electrically connected to each other by a shared bipolar partition wall, and the sheet-like separators being interposed between any two adjacent parts of the end and middle parts. By combining the cathode chamber and the anode chamber of adjacent inner electrolysis cells in one middle part of the multi-cell element, the number of individual components and thus the work needed for assembly of the multi-cell elements is further reduced.

Preferably, the anode chamber and/or the cathode chamber of the outmost electrolysis cells of the multi-cell element has a volume that is larger than a volume of each of the cathode chambers and anode chambers of the inner electrolysis cells by a factor in the range of 1.1 to 2. By increasing the volumes of the outmost chambers of the multi-cell element advantages of the conventional filter press design, namely highly efficient electrolysis with small cell volumes, low material and space requirements within the middle part of the multi-cell element are combined with an increased thermostability of the electrolyzer due to the increased heat capacity of the outmost cells. In other words: The larger cell-volumes of the outmost cell chambers of the multi-cell element allow for an improved intermediate cooling of the stack compared to the conventional filter press design. As a result, thermal homogeneity within the stack is improved.

There are several possibilities for the mechanical compression means to hold the electrolysis cells aggregated in a multi-cell element. In particular, the following three possibilities are preferred:
In preferred embodiments the mechanical compression means comprise tie rods extending externally across the electrolysis cells of the multi-cell element, and end components of the multi-cell element, wherein the end components are engaged with the tie rods to exert a compressive sealing force on the electrolysis cells of the multi-cell element. This design is closest to the conventional filter press design, in which, however, the electrolysis stack is subdivided into several multi-cell elements. The electrolysis cells of the multi-cell elements are sealed with respect to the surroundings at their circumferential peripheral region that may also serve to hold the sheet-like separators of the electrolysis cells.

In other preferred embodiments the mechanical compression means comprise at least two shell parts, within which the electrolysis cells of the respective multi-cell element are arranged, wherein the shell parts each comprise a circumferential flange portion, and bolts that are arranged such as to compress the electrolysis cells within the shell parts when the bolts are fastened. Preferably, the mechanical compression means further comprise at least one gasket arranged between the flange portions of the shell parts, wherein the gasket is compressed when the bolts are fastened. Alternatively, the flange portion may be made of or coated with a self-sealing material, such as PTFE. In these embodiments, the shell parts of the mechanical compression means form a casing for the multi-cell module that also seals the module from the surroundings. Thus, the individual electrolysis cells in the module do not need to be perfectly leak-tight, since the module is disposed with a two-stage sealing system. Further it is preferred if the shell parts provide for mechanical stability of the module for handling. In particular, the shell parts can be designed as two half-shells.

In further preferred embodiments, the mechanical compression means comprise circumferential external flange portions that are attached to the end and middle parts of the multi-cell element, and bolts fastening the flange portions of adjacent end and/or middle parts to each other.

All the above-described multi-cell elements can be used with external piping for distribution of electrolyte in or collection of electrolyte and/or product gases from their electrolysis cells. In other embodiments, the multi-cell element contains at least one internal manifold for distribution of electrolyte in or collection of electrolyte and/or product gases from the electrolysis cells of the multi-cell element. In conventional filter press electrolyzers, internal manifolds suffer from large stray currents due to the large number of electrolysis cells and corresponding stack voltages. However, in the inventive multi-cell element internal manifolds are advantageous, as the stray currents become small due to the smaller number of electrolysis cells and individual cell inlets and/or outlets replaced by an internal manifold further reduce manufacturing and maintenance costs.

In preferred embodiments, the electrolyzer further comprises a cell rack, wherein the electrolysis cells of the electrolysis stack and/or the means for mechanically securing the electrical connection of the electrolysis stack are mounted in the cell rack. A cell rack provides a stable frame for the electrolysis stack and allows the multi-cell elements and other parts to be designed in a less massive way. However, it is possible to make use of the invention in a standalone stack without a framing cell rack, as well.

Further advantages of the invention are described in the following with regard to the embodiments shown in the attached drawings.

### Brief Description of Drawings

- Fig. 1: shows schematically an electrolyzer according to the invention with an electrolysis stack comprising two multi-cell elements aggregated by mechanical compression means,
- Fig. 2: shows schematically a first embodiment of a multi-cell element to be used in the electrolyzer of Fig. 1, wherein the mechanical compression means comprise external tie rods,
- Fig. 3: shows schematically an embodiment of a multi-cell element to be used in the electrolyzer of Fig. 1, wherein the mechanical compression means comprise two shell parts encasing the electrolysis cells,
- Fig. 4: shows schematically a third embodiment of a multi-cell element to be used in the electrolyzer of Fig. 1, wherein end and middle parts of the multi-cell element are bolted together at circumferential flange portions serving as the mechanical compression means,
- Fig. 5: shows schematically two multi-cell elements according to the embodiment of Fig. 3, wherein means for mechanically securing the electrical interconnection of the electrolysis stack are attached to the multi-cell elements in order to provide a contact pressure,
- Fig. 6: shows schematically a variant of the first embodiment shown in Fig. 2, with end parts of the multi-cell elements comprising an anode or a cathode chamber of the outmost electrolysis cells, respectively, having a larger volume than the electrode chambers of the inner electrolysis cells.

### Detailed Description of Invention

In the drawings same parts are consistently identified by the same reference signs and are therefore generally described and referred to only once.

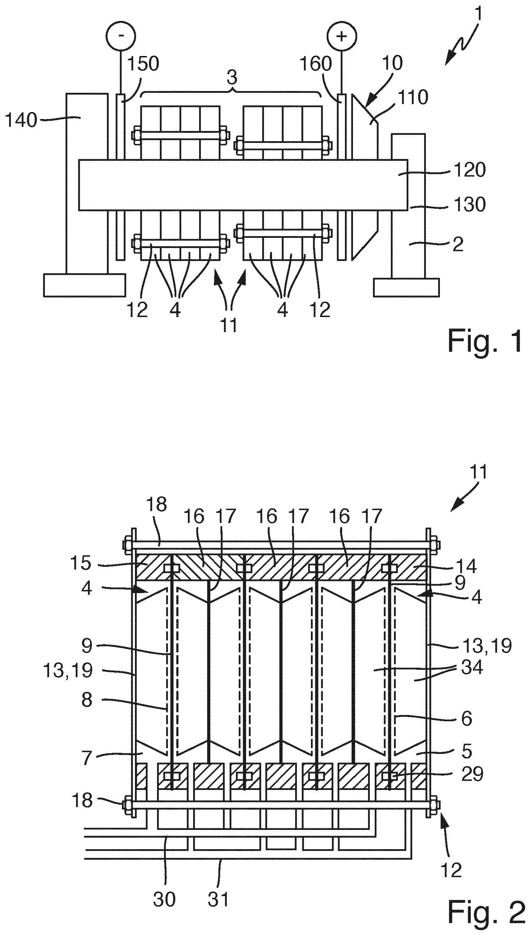

In **Fig. 1****,** an electrolyzer 1 according to the invention is shown. The electrolyzer 1 comprises an electrolysis stack 3 containing a plurality of panel-like electrolysis cells 4 in a side-by-side arrangement being electrically interconnected in series, and means 10 for mechanically securing the electrical interconnection of the electrolysis stack 3. Each electrolysis cell 4 comprises an anode chamber 5 with an anode 6 arranged therein and a cathode chamber 7 with a cathode 8 arranged therein, wherein the anode chamber 5 and the cathode chamber 7 are separated from one another by a sheet-like separator 9 (details not shown in Fig. 1, cf. Fig. 2 to 4). Preferably, the anode and cathode chamber 5, 7 are at least partly made from an electrically conductive material. According to the invention, the stack 3 contains at least two multi-cell elements 11, each comprising a plurality of the electrolysis cells 4 and mechanical compression means 12, wherein the electrolysis cells 4 of each multi-cell element 11 are held together in a sealed manner by the mechanical compression means 12. The means 10 are configured to mechanically secure the electrical interconnection of the multi-cell elements 11.

The stack 3 can be connected to an external power supply via endplates 150, 160 contacting the outmost electrolysis cells 4 of the stack 3.

The electrolyzer of Fig. 1 further comprises a cell rack 2, wherein the electrolysis cells of the electrolysis stack 3 and the means 10 for mechanically securing the electrical connection of the electrolysis stack 3 are mounted in the cell rack 2. The cell rack 2 of the electrolyzer shown in Fig. 1 comprises two end posts 130, 140 carrying a support beam 120 on each side. The support beams 120 support the electrolysis cells 4 in the cell rack 2. The electrolysis cells 4 are preferably suspended on the support beams 120 on both sides of the rack 2.

As shown in Fig. 1 the means 10 for mechanically securing the electrical connection of the electrolysis stack 3 can be arranged to interact with the outmost electrolysis cells 4 of the stack in order to exert a defined compressive force on the stack. For example, the means 10 for mechanically securing the electrical connection of the electrolysis stack 3 shown in Fig. 1 comprise a pressing plate 110 in engagement with the support beams 120 that serve as an external tie rod of the means 10 in this embodiment. The pressing plate 110 is moveable horizontally on the support beams 120 in order to compress the multi-cell elements 11 of the electrolysis stack 3 together with end plates 150, 160 providing the power supply. In an operational stage, endplates 150, 160 and multi-cell elements 11 are in direct contact to each other, so that they are electrically connected in series. To this end, the multi-cell elements 11 shown in the drawings are equipped with, preferably flat, exterior back walls 13 providing planar contact surfaces for the electrical connection with an adjacent multi-cell element 11.

In alternate embodiments (not shown), the means for mechanically securing the electrical interconnection of the electrolysis stack are attached to at least to, preferably to any two, neighboring multi-cell elements in order to provide a contact pressure for the neighboring multi-cell elements.

In Fig. 1, the electrolyzer 1 is shown in a maintenance state. In the maintenance state, the means 10 for mechanically securing the electrical connection of the electrolysis stack 3 are in a loosened state, while the mechanical compression means 12 are in a fastened state. As can be seen from Fig. 1, the multi-cell elements 11 are individually replaceable in the maintenance state, without having to disassemble the electrolyzer 1 completely.

As an example, the multi-cell elements 11 shown in Fig. 1 contain four electrolysis cells 4. Preferably, the multi-cell elements 11 each contain 3 to 50, more preferably 5 to 15, electrolysis cells 4. The electrolysis cells 4 of the multi-cell element 11 are connected electrically in series and in parallel with respect to an electrolyte cycle and product gas stream. Preferably, the electrolysis cells 4 of the multi-cell element 11 have a cell area in the range of 1 to 4 square meters. By combining several multi-cell elements 11 in one electrolyzer 1, an electrolyzer 1 with a nominal capacity in the megawatt range can be provided.

**In** **Fig. 2****,** a first embodiment of a multi-cell element 11 to be used in the electrolyzer 1 of Fig. 1 is shown in more detail. The multi-cell-element 11 comprises two end parts 14, 15, containing the anode chamber 5 and the cathode chamber 7 of the outmost electrolysis cells 4 of the multi-cell element 11, respectively. The multi-cell element 11 further comprises a number of middle parts 16 containing the cathode chamber 7 and the anode chamber 5 of adjacent inner electrolysis cells 4 being electrically connected to each other by a shared bipolar partition wall 17. The multi-cell element 11 also comprises sheet-like separators 9, being interposed between any two adjacent parts 14, 15, 16 of the end parts 14, 15 and middle parts 16. The end parts 14, 15 and the middle parts 16 are preferably sealed with respect to the separators 9 by gaskets 29 arranged in the respective contact regions of the parts 14, 15, 16.

To better understand the advantages of the invention as compared to the single element design in respect of material requirements and labor costs, the following example is given: A typical electrolyzer of single element design with 300 electrolysis cells would contain 600 half-shells and 300 flange pairs each to be fastened with a set of bolts, which need to be manufactured, handled and assembled. In comparison, an electrolyzer according to the invention with the same number of electrolysis cells and having ten electrolysis cells 4 per multi-cell element 11 has 2x30 end parts 14,15 and 10x29 middle parts 16, thus a total number of only 350 parts 14, 15, 16 compared to the 600 shell parts of the single element design. Likewise, the number of sets of bolts to be fastened is reduced from 300 to 30.

Within the electrolysis cells 4 spacers, e.g. in the form of ribs 34, can be provided between the bipolar partition walls 17 and the anode 6 and/or cathode 8. The spacers serve the purpose to support the electrodes 6, 8 within the cell 4 at a particularly low distance to the separator 9 as to reduce the cell voltage. In particular, the inventive design of the electrolyzer is applicable to zero-gap electrolyzers, in which the electrodes 6, 8 are in direct contact with the separator 9. The separator 9 may be a membrane or a diaphragm, for example.

As shown in Fig. 2 the electrolysis cells 4 of the multi-cell element 11 can be fed with electrolyte by external feed pipes 30, 31 with individual inlets to each chamber 5, 7 of the electrolysis cells 4. Similarly, an external piping (not shown) may be used to collect electrolyte and/or product gases from the cells 4.

In the embodiment shown in Fig. 2 the mechanical compression means 12 comprise tie rods 18 that extend externally across the electrolysis cells 4 of the multi-cell element 11. The mechanical compression means 12 further comprise end components 19 of the multi-cell element 11, wherein the end components 19 are engaged with the tie rods 18 to exert a compressive sealing force on the electrolysis cells 4 of the multi-cell element 11. The end components 19 may be formed by the end parts 13 being equipped with engagement means, such as perforated protrusions, for the engagement with the tie rods 18. Alternatively, the end components 19 may be separate components, as e.g. additional end plates of the multi-cell element 11.

The design of the multi-cell element 11 of Fig. 2 resembles the filter press design electrolyzers, with the differences, that the multi-cell element 11 contains a smaller number of individual electrolysis cells 4 (preferably in the range 3 to 50) and that the mechanical integrity and sealing is already achieved on the level of the multi-cell element 11 and not only on the level of the electrolyzers as a whole. Thus, the multi-cell element 11 is a self-contained unit that can be exchanged and serviced individually, e.g. in an offsite cell workshop, without affecting the other multi-cell elements 11 of the electrolyzer 1 at the site of the electrolysis facility.

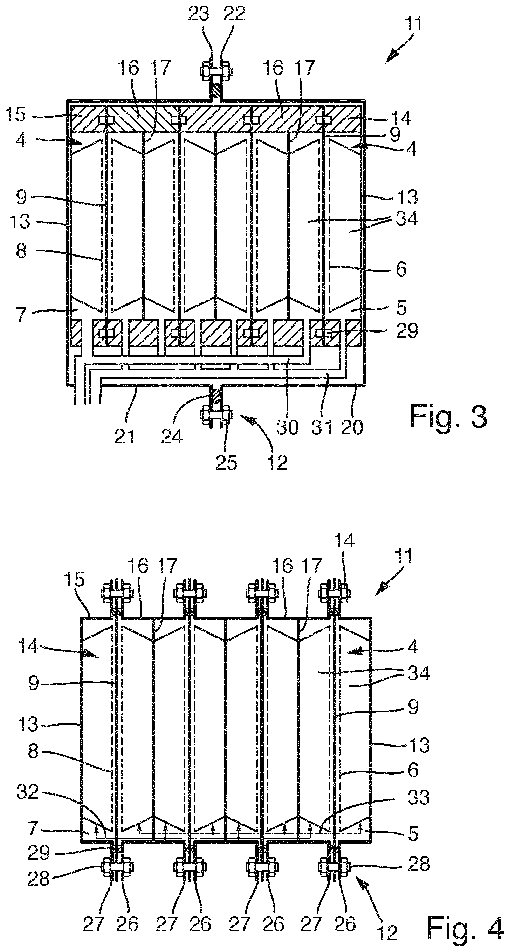

**In** **Fig. 3****,** a second embodiment of a multi-cell element 11 to be used in the electrolyzer 1 of Fig. 1 is shown. In the second embodiment, the mechanical compression means 12 comprise two shell parts 20, 21, within which the electrolysis cells 4 of the multi-cell element 11 are arranged. The shell parts 20, 21 each comprise a circumferential flange portion 22, 23. The mechanical compression means 12 further comprise a gasket 24 arranged between the flange portions 22, 23 of the two shell parts 20, 21, and bolts 25. The bolts 25 are arranged such as to compress the electrolysis cells 4 within the shell parts 20, 21 and the gasket 24 between the flange portions 22, 23 when the bolts 25 are fastened. As shown, the shell parts 20, 21 may preferably have the form of half-shells.

As compared to the first embodiment of the multi-cell element 11, the multi-cell element 11 of Fig. 3 has a two-stage sealing system. In addition to the single outer gasket 24 arranged between the flange portions 22, 23 of the two shell parts 20, 21, the electrolysis cells 4 are sealed with respect to the separators 9 individually, e.g. by inner gaskets 29, arranged in the contact regions of the parts 14, 15, 16 of the multi-cell element 11.

The electrolysis cells 4 of the multi-cell element 11 can be fed with electrolyte by feed pipes 30, 31 that are external to the cells 4 as in Fig. 2 but contained within the shell parts 20, 21. A similar piping (not shown) may be used to collect electrolyte and/or product gases from the cells 4. Thereby, the number of inlets and outlets of each multi-cell element 11 can be reduced, facilitating the assembly of the electrolyzer 1 on site.

Alternatively, the multi-cell element 11 shown in Fig. 3 can be supplied by external piping, distributing to and/or collecting the respective media from each cell 4 individually from the outside of the shell parts 20, 21.

In all other respects, the description of the first embodiment shown in Fig. 2 is applicable to the second embodiment shown in Fig. 3, accordingly.

**In** **Fig. 4****,** a third embodiment of a multi-cell element 11 to be used in the electrolyzer 1 of Fig. 1 is shown. In this embodiment the mechanical compression means 12 comprise circumferential external flange portions 26, 27 attached to the end and middle parts 14, 15, 16 of the multi-cell element 11, and bolts 28 fastening the flange portions 26, 27 of adjacent end and/or middle parts 14, 15, 16 to each other.

The multi-cell element 11 of the third embodiment further contains two internal manifolds 33, 34 for distribution of electrolyte to the electrolysis cells 4 of the multi-cell element 11. Further internal manifolds could be provided for collection of electrolyte and/or product gases from the cells 4.

In an alternative embodiment not shown the multi-cell element of Fig. 4 is provided with an external piping as shown in Fig. 2 instead of the internal manifolds.

In all other respects, the description of the first and second embodiments shown in Figs. 2 and 3 is applicable to the third embodiment shown in Fig. 4, accordingly.

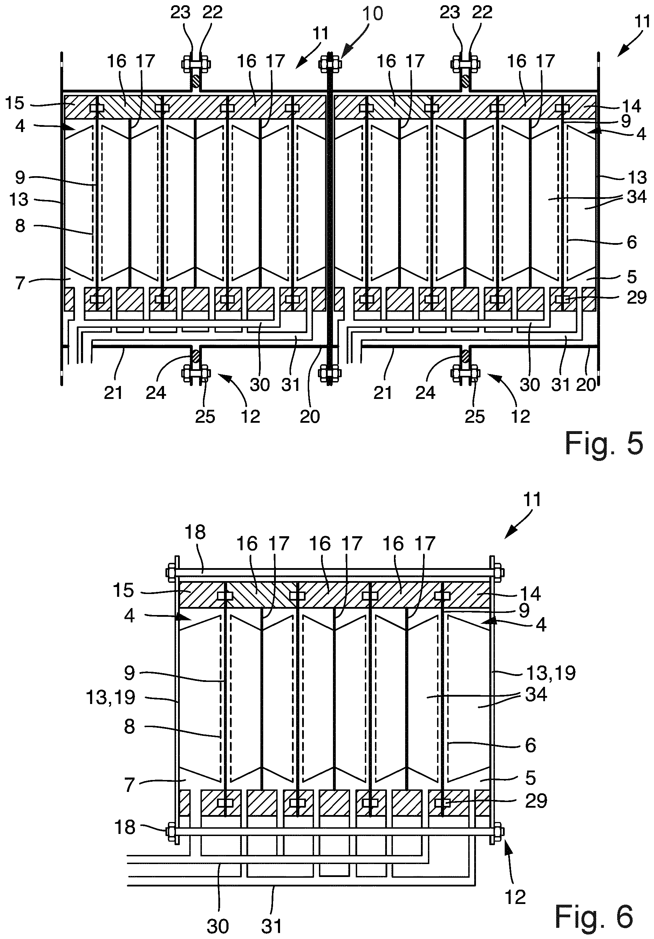

In Fig. 5, two multi-cell elements according to the embodiment of Fig. 3 are shown in a side-by-side arrangement. Means 10 for mechanically securing the electrical interconnection of the electrolysis stack 3 are attached to the two neighboring multi-cell elements 11 in order to provide a contact pressure for the neighboring multi-cell elements 11. For example, the means 10 can be made of circumferential flanges at both ends of the multi-cell elements 11, wherein the flanges of adjacent multi-cell elements 11 are bolted together.

Similar means 10 for mechanically securing the electrical interconnection of the electrolysis stack 3 may be used in conjunction with all other embodiments of the invention shown in the drawings, as well.

**Fig. 6** shows a variant of the multi-cell element shown in Fig. 2, wherein the anode chamber 5 and the cathode chamber 7 of the outmost electrolysis cells 4 of the multi-cell element 11, respectively, have a volume that is larger than the volume of each of the cathode chambers 7 and anode chambers 5 of the inner electrolysis cells 4 by a factor in the range of 1.1 to 2. The enlarged volume of the outmost electrode chambers increases the heat capacity of the stack 3 and thus allows for an improved temperature control of the stack.

In all other respects, the description of the embodiment shown in Fig. 2 is applicable to the variant shown in Fig. 6, accordingly.

The electrolyzer 1 according to the invention is in particular suitable for chlor-alkali electrolysis and alkaline water electrolysis.

### List of Reference Signs

- 1: electrolyzer
- 2: cell rack
- 3: electrolysis stack
- 4: electrolysis cell
- 5: anode chamber
- 6: anode
- 7: cathode chamber
- 8: cathode
- 9: separator
- 10: means for mechanically securing electrical interconnection
- 11: multi-cell element
- 12: mechanical compression means
- 13: back wall
- 14, 15: end part
- 16: middle part
- 17: partition wall
- 18: tie rod
- 19: end component
- 20, 21: shell part
- 22, 23: flange portion
- 24: gasket
- 25: bolts
- 26, 27: flange portion
- 28: bolts
- 29: gasket
- 30, 31: feed pipes
- 32, 33: internal manifold
- 34: rib

- 110: pressing plate
- 120: support beam
- 130, 140: end posts
- 150, 160: end plates

## Claims

1. Electrolyzer comprising
an electrolysis stack (3) containing a plurality of panel-like electrolysis cells (4) in a side-by-side arrangement being electrically interconnected in series,
wherein each electrolysis cell (4) comprises an anode chamber (5) with an anode (6) arranged therein and a cathode chamber (7) with a cathode (8) arranged therein, wherein the anode chamber (5) and the cathode chamber (7) are separated from one another by a sheet-like separator (9),
and means (10) for mechanically securing the electrical interconnection of the electrolysis stack (3),
**characterized in that**
the stack (3) contains at least two multi-cell elements (11), each comprising a plurality of the electrolysis cells (4) and mechanical compression means (12), wherein the electrolysis cells (4) of each multi-cell element (11) are held together in a sealed manner by the mechanical compression means (12), and wherein the means (10) are configured to mechanically secure the electrical interconnection of the multi-cell elements (11),
wherein the means (10) for mechanically securing the electrical interconnection of the electrolysis stack (3) are arranged to interact with the outmost electrolysis cells (4) of the stack (3) in order to exert a defined compressive force on the stack (3), or
wherein the means (10) for mechanically securing the electrical interconnection of the electrolysis stack (3) are attached to at least two neighboring multi-cell elements (11) in order to provide a contact pressure for the neighboring multi-cell elements (11).

2. Electrolyzer according to claim 1, **characterized in that** the electrolyzer (1) is configured to have a maintenance state, in which maintenance state the means (10) for mechanically securing the electrical interconnection of the electrolysis stack (3) are in a loosened state, while the mechanical compression means (12) are in a fastened state, wherein the multi-cell elements (11) are individually replaceable in the maintenance state of the electrolyzer (1).

3. Electrolyzer according to one of the claims 1 to 2, **characterized in that** the multi-cell elements (11) each contain 3 to 50, more preferably 5 to 15, electrolysis cells (4).

4. Electrolyzer according to one of the claims 1 to 3, **characterized in that** the multi-cell elements (11) are equipped with exterior back walls (13) providing contact surfaces for the electrical connection with an adjacent multi-cell element (11).

5. Electrolyzer according to one of the claims 1 to 4, **characterized in that** the multi-cell-elements (11) comprise two end parts (14, 15) containing the anode chamber (5) and the cathode chamber (7) of the outmost electrolysis cells (4) of the multi-cell element (11), respectively, a number of middle parts (16) containing the cathode chamber (7) and the anode chamber (5) of adjacent inner electrolysis cells (4) being electrically connected to each other by a shared bipolar partition wall (17), and the sheet-like separators (9) being interposed between any two adjacent parts (14, 15, 16) of the end (14, 15) and middle parts (16).

6. Electrolyzer according to claim 5, **characterized in that** the anode chamber (5) and/or the cathode chamber (7) of the outmost electrolysis cells (4) of the multi-cell element (11) has a volume that is larger than a volume of each of the cathode chambers (7) and anode chambers (5) of the inner electrolysis cells (4) by a factor in the range of 1.1 to 2.

7. Electrolyzer according to one of the claims 1 to 6, **characterized in that** the mechanical compression means (12) comprise tie rods (18) extending externally across the electrolysis cells (4) of the multi-cell element (11), and end components (19) of the multi-cell element (11), wherein the end components (19) are engaged with the tie rods (18) to exert a compressive sealing force on the electrolysis cells (4) of the multi-cell element (11).

8. Electrolyzer according to one of the claims 1 to 6, **characterized in that** mechanical compression means (12) comprise
at least two shell parts (20, 21), within which the electrolysis cells (4) of the respective multi-cell element (11) are arranged, wherein the shell parts (20, 21) each comprise a circumferential flange portion (22, 23), and
bolts (25) that are arranged such as to compress the electrolysis cells (4) within the shell parts (20, 21) when the bolts (25) are fastened.

9. Electrolyzer according to claim 8, **characterized in that** the mechanical compression means (12) further comprise at least one gasket (24) arranged between the flange portions (22, 23) of the shell parts (20, 21), wherein the gasket (24) is compressed when the bolts (25) are fastened.

10. Electrolyzer according to claim 5 or 6, **characterized in that** the mechanical compression means (12) comprise circumferential external flange portions (26, 27) attached to the end and middle parts (14, 15, 16) of the multi-cell element (11), and bolts (28) fastening the flange portions (26, 27) of adjacent end and/or middle parts (14, 15, 16) to each other.

11. Electrolyzer according to one of the claims 1 to 10, **characterized in that** the multi-cell element (11) contains at least one internal manifold for distribution of electrolyte or collection of electrolyte and/or product gases from the electrolysis cells (4) of the multi-cell element (11).

12. Electrolyzer according to one of the claims 1 to 11, **characterized in that** the electrolyzer (1) further comprises a cell rack (2), wherein the electrolysis cells (4) of the electrolysis stack (3) and/or the means (10) for mechanically securing the electrical connection of the electrolysis stack (3) are mounted in the cell rack (2).

## Patentansprüche

1. Elektrolyseur umfassend
einen Elektrolysestapel (3), der eine Vielzahl von plattenartigen Elektrolysezellen (4) in einer Seite an Seite aufgereihten Anordnung enthält, die elektrisch in Reihe geschaltet sind,
wobei jede Elektrolysezelle (4) eine Anodenkammer (5) mit einer darin angeordneten Anode (6) und eine Kathodenkammer (7) mit einer darin angeordneten Kathode (8) umfasst, wobei die Anodenkammer (5) und die Kathodenkammer (7) durch einen blattartigen Separator (9) voneinander getrennt sind,
und Mittel (10) zum mechanischen Sichern der elektrischen Verbindung des Elektrolysestapels (3),
**dadurch gekennzeichnet, dass**
der Stapel (3) mindestens zwei Mehrzellen-Elemente (11) enthält, die jeweils eine Mehrzahl der Elektrolysezellen (4) und mechanische Kompressionsmittel (12) umfassen, wobei die Elektrolysezellen (4) jedes Mehrzellen-Elements (11) durch die mechanischen Kompressionsmittel (12) abgedichtet zusammengehalten werden und wobei die Mittel (10) so konfiguriert sind, dass sie die elektrische Verbindung zwischen den Mehrzellen-Elementen (11) mechanisch sichern,
wobei die Mittel (10) zum mechanischen Sichern der elektrischen Verbindung des Elektrolysestapels (3) so angeordnet sind, dass sie mit den äußersten Elektrolysezellen (4) des Stapels (3) zusammenwirken, um eine definierte Druckkraft auf den Stapel (3) auszuüben, oder
wobei die Mittel (10) zum mechanischen Sichern der elektrischen Verbindung des Elektrolysestapels (3) an mindestens zwei benachbarten Mehrzellen-Elementen (11) angebracht sind, um einen Kontaktdruck für die benachbarten Mehrzellenelemente (11) bereitzustellen.

2. Elektrolyseur nach Anspruch 1, **dadurch gekennzeichnet, dass** der Elektrolyseur (1) so konfiguriert ist, dass er einen Wartungszustand aufweist, in welchem die Mittel (10) zum mechanischen Sichern der elektrischen Verbindung des Elektrolysestapels (3) in einem gelösten Zustand sind, während die mechanischen Kompressionsmittel (12) in einem angezogenen Zustand sind, wobei die Mehrzellenelemente (11) im Wartungszustand des Elektrolyseurs (1) einzeln austauschbar sind.

3. Elektrolyseur nach einem der Ansprüche 1 bis 2, **dadurch gekennzeichnet, dass** die Mehrzellenelemente (11) jeweils 3 bis 50, vorzugsweise 5 bis 15, Elektrolysezellen (4) enthalten.

4. Elektrolyseur nach einem der Ansprüche 1 bis 3, **dadurch gekennzeichnet, dass** die Mehrzellenelemente (11) mit äußeren Rückwänden (13) ausgestattet sind, die Kontaktflächen für die elektrische Verbindung mit einem benachbarten Mehrzellenelement (11) bereitstellen.

5. Elektrolyseur nach einem der Ansprüche 1 bis 4, **dadurch gekennzeichnet, dass** die Mehrzellenelemente (11) zwei Endteile (14, 15), die die Anodenkammer (5) bzw. die Kathodenkammer (7) der äußersten Elektrolysezellen (4) des Mehrzellenelements (11) enthalten, eine Anzahl von Mittelteilen (16), die die Kathodenkammer (7) und die Anodenkammer (5) benachbarter innerer Elektrolysezellen (4) enthalten, die durch eine gemeinsame bipolare Trennwand (17) elektrisch miteinander verbunden sind, und die blattartigen Separatoren (9) umfassen, die zwischen jeweils zwei benachbarten Teilen (14, 15, 16) der End- (14, 15) und Mittelteile (16) eingefügt sind.

6. Elektrolyseur nach Anspruch 5, **dadurch gekennzeichnet, dass** die Anodenkammer (5) und/oder die Kathodenkammer (7) der äußersten Elektrolysezellen (4) des Mehrzellen-Elements (11) ein Volumen aufweist, das um einen Faktor im Bereich von 1,1 bis 2 größer ist als das Volumen jeder der Kathodenkammern (7) und Anodenkammern (5) der inneren Elektrolysezellen (4).

7. Elektrolyseur gemäß einem der Ansprüche 1 bis 6, **dadurch gekennzeichnet, dass** die mechanischen Kompressionsmittel (12) Zuganker (18), die sich außen über die Elektrolysezellen (4) des Mehrzellen-Elements (11) erstrecken, und Endkomponenten (19) des Mehrzellen-Elements (11) umfassen, wobei die Endkomponenten (19) mit den Zugankern (18) in Eingriff stehen, um eine kompressive Dichtungskraft auf die Elektrolysezellen (4) des Mehrzellen-Elements (11) auszuüben.

8. Elektrolyseur nach einem der Ansprüche 1 bis 6, **dadurch gekennzeichnet, dass** die mechanischen Kompressionsmittel (12) mindestens zwei Schalenteile (20, 21), innerhalb derer die Elektrolysezellen (4) des jeweiligen Mehrzellen-Elements (11) angeordnet sind, wobei die Schalenteile (20, 21) jeweils einen umlaufenden Flanschabschnitt (22, 23) aufweisen, und Schrauben (25) umfassen, die so angeordnet sind, dass sie die Elektrolysezellen (4) in den Schalenteilen (20, 21) zusammendrücken, wenn die Schrauben (25) festgezogen werden.

9. Elektrolyseur nach Anspruch 8, **dadurch gekennzeichnet, dass** die mechanischen Kompressionsmittel (12) ferner mindestens eine Dichtung (24) umfassen, die zwischen den Flanschabschnitten (22, 23) der Schalenteile (20, 21) angeordnet ist, wobei die Dichtung (24) zusammengedrückt wird, wenn die Schrauben (25) angezogen werden.

10. Elektrolyseur nach Anspruch 5 oder 6, **dadurch gekennzeichnet, dass** die mechanischen Kompressionsmittel (12) umlaufende äußere Flanschabschnitte (26, 27) umfassen, die an den End- und Mittelteilen (14, 15, 16) des Mehrzellen-Elements (11) angebracht sind, und Schrauben (28), die die Flanschabschnitte (26, 27) benachbarter Endund/oder Mittelteile (1 4, 15, 16) aneinander befestigen.

11. Elektrolyseur gemäß einem der Ansprüche 1 bis 10, **dadurch gekennzeichnet, dass** das Mehrzellen-Element (11) mindestens einen internen Verteiler zur Verteilung von Elektrolyt oder zur Sammlung von Elektrolyt und/oder Produktgasen aus den Elektrolysezellen (4) des Mehrzellen-Elements (11) enthält.

12. Elektrolyseur nach einem der Ansprüche 1 bis 11, **dadurch gekennzeichnet, dass** der Elektrolyseur (1) ferner ein Zellengestell (2) umfasst, wobei die Elektrolysezellen (4) des Elektrolysestapels (3) und/oder die Mittel (10) zur mechanischen Sicherung der elektrischen Verbindung des Elektrolysestapels (3) in dem Zellengestell (2) eingebaut sind.

## Revendications

1. Electrolyseur comprenant
une pile d'électrolyse (3) contenant plusieurs cellules d'électrolyse (4) en forme de panneau disposées côte à côte et interconnectées électriquement en série,
dans laquelle chaque cellule d'électrolyse (4) comprend une chambre d'anode (5) dans laquelle est disposée une anode (6) et une chambre de cathode (7) dans laquelle est disposée une cathode (8), la chambre d'anode (5) et la chambre de cathode (7) étant séparées l'une de l'autre par un séparateur en forme de feuille (9),
et des moyens (10) pour sécuriser mécaniquement l'interconnexion électrique de la pile d'électrolyse (3),
**caractérisée en ce que**
la pile (3) contient au moins deux éléments multi-cellules (11), chacun comprenant une pluralité de cellules d'électrolyse (4) et des moyens de compression mécanique (12), dans lesquels les cellules d'électrolyse (4) de chaque élément multi-cellules (11) sont maintenues ensemble de manière étanche par les moyens de compression mécanique (12), et dans lesquels les moyens (10) sont configurés pour sécuriser mécaniquement l'interconnexion électrique des éléments multi-cellules (11),
dans lequel les moyens (10) pour sécuriser mécaniquement l'interconnexion électrique de la pile d'électrolyse (3) sont conçus pour interagir avec les cellules d'électrolyse les plus éloignées (4) de la pile (3) afin d'exercer une force de compression définie sur la pile (3), ou
dans lequel les moyens (10) pour sécuriser mécaniquement l'interconnexion électrique de la pile d'électrolyse (3) sont attachés à au moins deux éléments multi-cellules voisins (11) afin de fournir une pression de contact pour les éléments multi-cellules voisins (11).

2. Electrolyseur selon la revendication 1, **caractérisé en ce que** l'électrolyseur (1) est configuré pour avoir un état de maintenance, dans lequel l'état de maintenance les moyens (10) pour sécuriser mécaniquement l'interconnexion électrique de la pile d'électrolyse (3) sont dans un état desserré, tandis que les moyens de compression mécanique (12) sont dans un état fixé, dans lequel les éléments multi-cellules (11) sont remplaçables individuellement dans l'état de maintenance de l'électrolyseur (1).

3. Electrolyseur selon l'une des revendications 1 à 2, **caractérisé en ce que** les éléments multi-cellules (11) contiennent chacun de 3 à 50 cellules d'électrolyse (4), de préférence de 5 à 15.

4. Electrolyseur selon l'une des revendications 1 à 3, **caractérisé en ce que** les éléments multi-cellules (11) sont équipés de parois arrière extérieures (13) fournissant des surfaces de contact pour la connexion électrique avec un élément multi-cellules adjacent (11).

5. Electrolyseur selon l'une des revendications 1 à 4, **caractérisé en ce que** les éléments multi-cellules (11) comprennent
deux parties d'extrémité (14, 15) contenant la chambre anodique (5) et la chambre cathodique (7) des cellules d'électrolyse les plus éloignées (4) de l'élément multi-cellules (11), respectivement,
un certain nombre de parties centrales (16) contenant la chambre de cathode (7) et la chambre d'anode (5) des cellules d'électrolyse intérieures adjacentes (4) étant reliées électriquement l'une à l'autre par une paroi de séparation bipolaire commune (17), et
les séparateurs en forme de feuille (9) interposés entre deux parties adjacentes quelconques (14, 15, 16) des parties d'extrémité (14, 15) et des parties centrales (16).

6. Electrolyseur selon la revendication 5, **caractérisé en ce que** la chambre anodique (5) et/ou la chambre cathodique (7) des cellules d'électrolyse les plus éloignées (4) de l'élément multicellulaire (11) a un volume qui est plus grand que le volume de chacune des chambres cathodiques (7) et des chambres anodiques (5) des cellules d'électrolyse intérieures (4) d'un facteur compris entre 1,1 et 2.

7. Electrolyseur selon l'une des revendications 1 à 6, **caractérisé en ce que** les moyens de compression mécanique (12) comprennent des tirants (18) s'étendant extérieurement à travers les cellules d'électrolyse (4) de l'élément multi-cellules (11), et des composants d'extrémité (19) de l'élément multi-cellules (11), dans lequel les composants d'extrémité (19) sont engagés avec les tirants (18) pour exercer une force de compression d'étanchéité sur les cellules d'électrolyse (4) de l'élément multi-cellules (11).

8. Electrolyseur selon l'une des revendications 1 à 6, **caractérisé en ce que** les moyens de compression mécanique (12) comprennent
au moins deux parties d'enveloppe (20, 21), à l'intérieur desquelles sont disposées les cellules d'électrolyse (4) de l'élément multicellulaire (11) respectif, les parties d'enveloppe (20, 21) comprenant chacune une partie de bride circonférentielle (22, 23), et
des boulons (25) disposés de manière à comprimer les cellules d'électrolyse (4) à l'intérieur des pièces d'enveloppe (20, 21) lorsque les boulons (25) sont fixés.

9. Electrolyseur selon la revendication 8, **caractérisé en ce que** les moyens de compression mécanique (12) comprennent en outre au moins un joint (24) disposé entre les parties de bride (22, 23) des parties de coque (20, 21), dans lequel le joint (24) est comprimé lorsque les boulons (25) sont fixés.

10. Electrolyseur selon la revendication 5 ou 6, **caractérisé en ce que** les moyens de compression mécanique (12) comprennent des parties de bride externes circonférentielles (26, 27) fixées aux parties d'extrémité et du milieu (14, 15, 16) de l'élément multi-cellules (11), et des boulons (28) fixant les parties de bride (26, 27) des parties d'extrémité et/ou du milieu adjacentes (14, 15, 16) l'une à l'autre.

11. Electrolyseur selon l'une des revendications 1 à 10, **caractérisé en ce que** l'élément multicellulaire (11) contient au moins un collecteur interne pour la distribution de l'électrolyte ou la collecte de l'électrolyte et/ou des gaz de produit provenant des cellules d'électrolyse (4) de l'élément multicellulaire (11).

12. Electrolyseur selon l'une des revendications 1 à 11, **caractérisé en ce que** l'électrolyseur (1) comprend en outre un support de cellules (2), dans lequel les cellules d'électrolyse (4) de l'empilement d'électrolyse (3) et/ou les moyens (10) pour sécuriser mécaniquement la connexion électrique de l'empilement d'électrolyse (3) sont montés dans le support de cellules (2).
